# EUROPEAN PATENT APPLICATION

(11) **EP 2 613 124 A2**
(43) Date of publication of application: **10.07.2013**
(21) Application number: 13150279.1
(22) Date of filing: 04.01.2013
(51) Int. Cl.: G01C 21/20, G01C 22/00

(54) **Robust method for signal segmentation for motion classification in personal navigation**

(30) Priority: 09.01.2012 US 201213346241
(71) Applicant: Honeywell International Inc., Morristown, NJ 07962-2245 (US)
(72) Inventor: Ma, Yunqian, Morristown, NJ New Jersey 07962-2245 (US); Zakrzewski, Kyle, Morristown, NJ New Jersey 07962-2245 (US)
(74) Representative: Houghton, Mark Phillip

(57) **Abstract**

A method to accurately detect true peaks and true valleys in a real-time incoming signal is provided. The method includes segmenting the real-time incoming signal into short-time intervals; determining an initial estimated frequency by fast Fourier transforming data in the short-time intervals, setting a sliding window width based on the initial estimated frequency, determining at least one peak data element or valley data element based on analysis of the real-time incoming signal within a first sliding window; and determining at least one peak data element or valley data element based on analysis of the real-time incoming signal within a second sliding window. A first portion of the second sliding window overlaps a second portion of the first sliding window.

## Description

### BACKGROUND

Personal navigation systems have received attention from both the industrial and academic research communities in recent years. Numerous target applications have been proposed, including localization for members of a team of firefighters, first responders, and soldiers. In these applications, the safety and efficiency of the entire team depends on the availability of accurate position and orientation (pose) estimates of each team member. While the team is operating within the coverage area of GPS satellites, each person's pose can be reliably estimated. However, a far more challenging scenario occurs when the team is inside a building, in an urban canyon, or under a forest canopy. In these cases, GPS-based global localization is not sufficiently accurate or may be completely unavailable, and pose estimation must be accomplished through secondary means. One popular approach is to equip each person with a body-mounted strap-down inertial measurement unit (IMU) typically comprising three accelerometers and three gyroscopes in orthogonal triads, which measure the person's motion. To mitigate the drift errors in strap-down inertial navigation, conventional systems typically include aiding sensors, such as a camera or laser scanner which sense the color, texture, or geometry of the environment. Each person's pose can then be estimated individually by fusing the available sensing information.

In these personal navigation systems, the number of gait templates stored in a motion dictionary is based on the number of motion classes (e.g., walking, running, crawling), the number of frequencies (e.g., slow, medium, fast), and the number of phases (e.g., the number of full steps, such as, from right-foot-down position to the next right-foot-down position). Prior art systems typically require about 30 phases. A personal navigation system, which stores five motion classes at five frequencies for ten people, will store 7,500 gait templates in a motion dictionary.

### SUMMARY

The present application relates to a method to accurately detect true peaks and true valleys in a real-time incoming signal. The method includes segmenting the real-time incoming signal into short-time intervals; determining an initial estimated frequency by fast Fourier transforming data in the short-time intervals, setting a sliding window width based on the initial estimated frequency, determining at least one peak data element or valley data element based on analysis of the real-time incoming signal within a first sliding window; and determining at least one peak data element or valley data element based on analysis of the real-time incoming signal within a second sliding window. A first portion of the second sliding window overlaps a second portion of the first sliding window.

### DRAWINGS

Understanding that the drawings depict only exemplary embodiments and are not therefore to be considered limiting in scope, the exemplary embodiments will be described with additional specificity and detail through the use of the accompanying drawings, in which:

Figure 1 is a block diagram of one embodiment of a personal navigation system;

Figure 2 is an exemplary plot of two phases of a real-time incoming signal from a single channel of an inertial measurement unit;

Figure 3 is an exemplary representation of a short-time interval of a segmented real-time incoming signal and associated window segments;

Figure 4 is an exemplary representation of data from the three accelerometers in three accelerometer channels after the data has been segmented;

Figure 5 is flow chart depicting one embodiment of a method for accurately detecting true peaks and true valleys in a real-time incoming signal; and

Figure 6 is a flow chart of one embodiment of a method for segmenting real-time incoming signals for motion classification in a personal navigation system.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual acts may be performed. The following detailed description is, therefore, not to be taken in a limiting sense.

In order to reduce the size of gait templates (i.e., the number of phases in gait templates) in a motion dictionary for a personal navigation system, a robust detection of peaks and valleys in a real-time incoming data stream from an inertial measurement unit (IMU) on the user of the personal navigation system is required. As defined herein, robust detection (determination) of peaks and valleys is a correct detection (determination) of the true (global) peaks and the true (global) valleys in the real-time incoming data stream. The terms "true peak" and "true peak data element" are used interchangeably herein. The terms "true valley" and "true valley data element" are used interchangeably herein.

The terms "motion dictionary", "motion classification dictionary", and "dictionary" are used interchangeably herein.

As used herein, the terms "gait" and "gait mode" refer to the pattern of movement of the user's limbs while moving from one location to another. Thus, each gait mode is comprised of a pattern of repetitive motions. The cycle of repetitive motion is generally referred to herein as a "step" although it may refer to motions of parts of the body other than the legs, such as the arms or torso in a military crawl. Exemplary gait modes include, but are not limited to, level walking, stair ascending/descending, side-shuffle walking, duck (firefighter) walking, hand-and-knee crawling, military (elbow) crawling, jogging, running, and sprinting. In addition, in some embodiments, a "no-model" hypothesis is stored in the dictionary. The "no-model" hypothesis is a default hypothesis that covers the instances when the executed motion, as represented by the wavelet, does not match any of the stored gait templates.

The terms "frequency" and "gait frequency" refer to how quickly the corresponding motion is repeated. For example, the frequency of level walking refers to how quickly each step is repeated.

The terms "phase" and "gait phase" refer to the shift in the starting position of the repetitive motion. The gait phase in the gait template defines which foot is starting on the ground. In one implementation of this embodiment, a 0 degree phase template is generated from the time when the left foot is on the ground and the right foot is moving in the direction of movement. The 0 degree phase is completed when the left foot is back on the ground. Thus, the 0 degree phase extends from a first true peak (or first true valley) to the third true peak (or third true valley) in the signal received from the IMU. Thus, the 0 degree phase extends for two complete periods (2T). In this case, the 180 degree phase template is generated from the time when the right foot is on the ground. The 180 degree phase template extends from a second true peak (or second true valley) to the fourth true peak (or fourth true valley) in the signal received from the IMU. Thus, the 180 degree phase extends for two complete periods (2T). In another implementation of this embodiment, the 0 degree phase template is generated from the time when the right foot is on the ground and the 180 degree phase template is generated from the time when the left foot is on the ground.

The terms "template" and "gait template" are used interchangeably herein. In one implementation of this embodiment, each template corresponds to one of the six channels from six sensors in the IMU. The gait templates associated with the plurality of channels for a given gait mode are referred to herein as a set of associated gait templates. In one implementation of this embodiment, each set of associated gait templates corresponds to three channels from three gyroscopes in the IMU and the three channels from three accelerometers in the IMU. In another implementation of this embodiment, each set of associated gait templates corresponds to three channels from three gyroscopes in the IMU. In yet another implementation of this embodiment, each set of associated gait templates corresponds to three channels from three accelerometers in the IMU.

As noted above, the prior art methods to classify motion compare the received data to a motion class dictionary, which contains wavelets (gait templates) with thirty phase shifts (e.g., 30 full right-foot-down to right-foot-down steps) for each motion type at each frequency. The thirty phases for each gait and gait frequency require a large amount of processing time and template storage in the motion dictionary.

The methods and apparatuses described here improve the robustness of a motion classifier (e.g., processing unit) in a personal navigation system. Since the robust motion classifier correctly identifies the true peaks and true valleys, the number of phases required in each gait template is reduced from thirty phases to four phases or two phases. Thus, the methods described herein only require either four phases (two phases for a 0 degree phase and two phases for a 180 degree phase) in the gait templates or two phases (two phases for a 0 degree phase or two phases for a 180 degree phase) in the gait templates. The embodiments in which one or more of the gait templates include only two phases for a 0 degree phase or include only two phases for a 180 degree phase are used for those gait modes in which only the peaks or only the valleys in the signal output from the IMU are clearly distinguishable.

A motion classification system with four (or two) phases for each gait and gait frequency requires a reduced amount of template storage in the motion dictionary and a reduced amount of processing time from the prior art motion classification systems that require about thirty phases for each gait and gait frequency. Reducing the size of gait templates from 30 phases to four or two phases also permits use of templates for more users in a single motion dictionary.

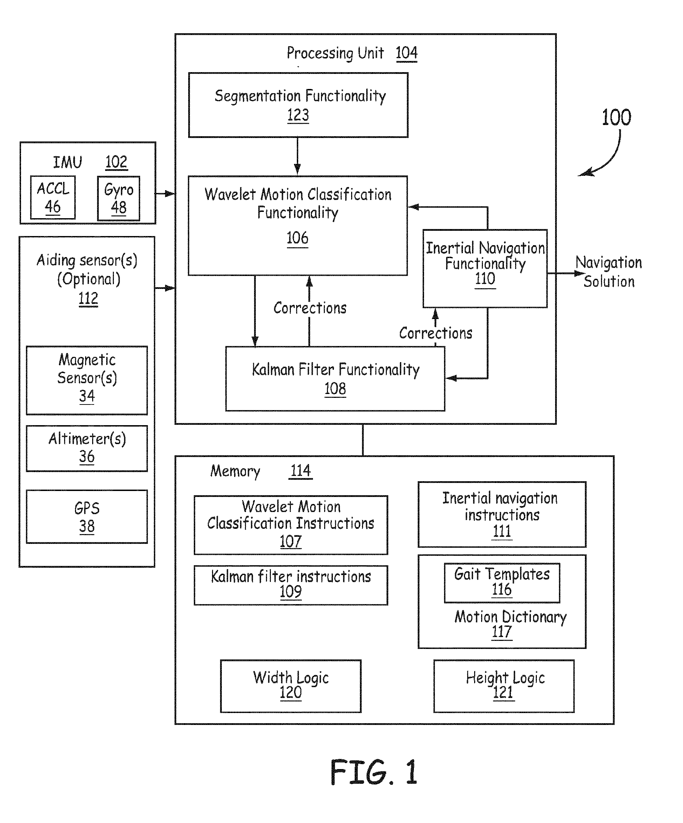

Figure 1 is a block diagram of one embodiment of a personal navigation system 100. The personal navigation system 100 is worn by a user to accurately estimate a position and orientation (pose) of the user. The personal navigation system 100 includes an inertial measurement unit 102, a processing unit 104, and a memory 114. The inertial measurement unit 102 senses motion of a user wearing the personal navigation system 100 and outputs one or more channels of inertial motion data corresponding to the sensed motion. For example, in this embodiment, the IMU 102 includes three linear accelerometers 46 and three gyroscopes 48 to provide six channels of data that include information indicative of three mutually orthogonal directions. In one implementation of this embodiment, the IMU 102 includes three mutually orthogonal linear accelerometers 46 and three mutually orthogonal gyroscopes 48.

The IMU 102 provides the inertial motion data to the processing unit 104. In some embodiments of the personal navigation system 100, the IMU is implemented as a Micro-electro-mechanical system (MEMS) based inertial measurement unit, such as a Honeywell BG1930 MEMS inertial measurement unit.

The processing unit 104 includes segmentation functionality 123, wavelet motion classification functionality 106, Kalman filter functionality 108, and inertial navigation functionality 110. The segmentation functionality 123 periodically segments one selected channel of real-time incoming signal from the IMU 102 into short-time intervals and finds the true peaks and true valleys in each of the short-time intervals. The channel data is segmented to represent a single step for gait modes related to walking or running. The channel data can be segmented based on one or more of a plurality of techniques, such as peak detection, valley detection, or zero crossing.

The wavelet motion classification functionality 106 compares the true peaks and true valleys in each of the short-time intervals for the selected channel to a plurality of gait templates 116 stored in the motion dictionary 117 in the memory 114. The wavelet motion classification functionality 106 also compares the non-segmented data from the other channels (e.g., the other five channels from the six channels of data received from the IMU 102) to the gait templates 116 in the set of associated gait templates. The wavelet motion classification functionality 106 identifies the template which most closely matches the at least one wavelet obtained from the received inertial motion data based on a statistical analysis. Each set of associated gait templates in the gait templates 116 corresponds to a particular user gait, frequency, and phase (either a zero degree phase or a 180 degree phase).

The inertial navigation functionality 110 calculates a navigation solution including heading, speed, position, etc., based on the inertial motion data received from the IMU 102 using techniques known to one of skill in the art.

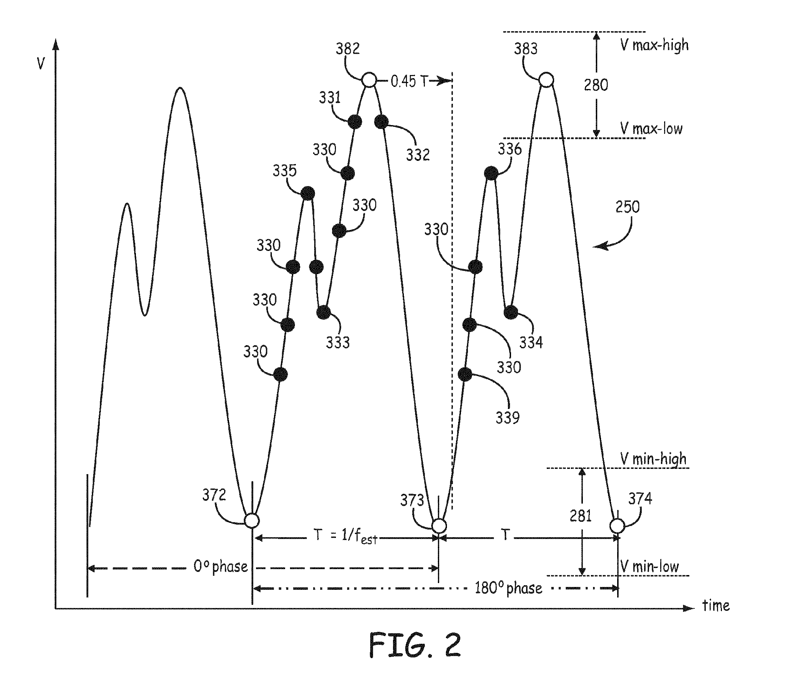

Figure 2 is an exemplary plot of two phases of a real-time incoming signal 250 from a single channel of an inertial measurement unit (IMU) 102. The black dots 330-336 and the open circles 382-383 and 372-374 represent data elements, which are referred to generally herein as 330, in the real-time incoming signal 250. In this exemplary plot, the vertical axis of the plot is voltage and the horizontal axis of the plot is time. The black dots represent data elements 330 that are not the true minimum 372-374, true maximum 382-383, false minimum 333-334, and false maximum 335-336 for the exemplary 180° phase of the real-time incoming signal 250 shown in Figure 2. The open circles 382 and 383 represent the data elements 330 that are the global maximums for a phase of the real-time incoming signal 250. The open circles 372-373 represent the data elements 330 that are the global minimums for the exemplary 180° phase of the real-time incoming signal 250.

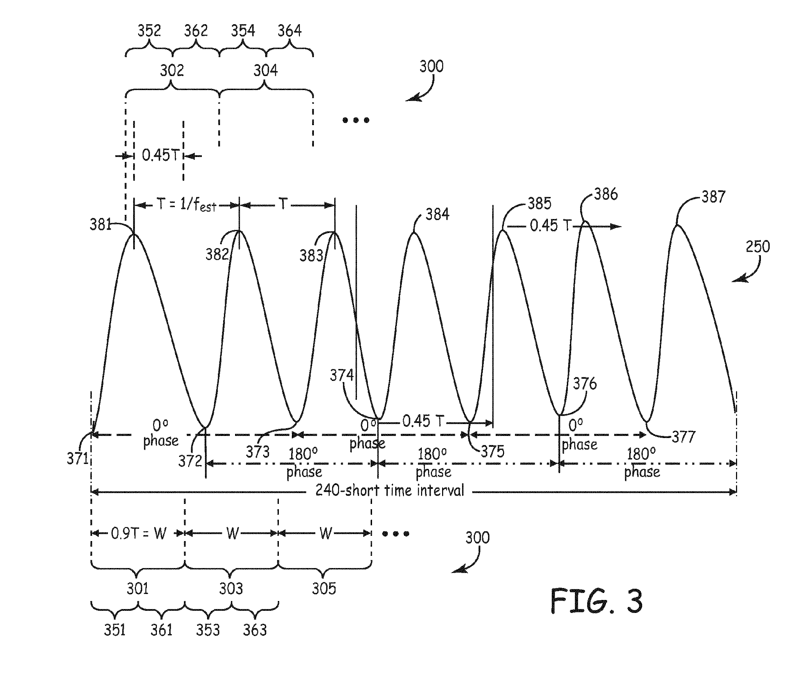

Figure 3 is an exemplary representation of a short-time interval 240 of a segmented real-time incoming signal 251 and associated window segments 301-305. The segmented real-time incoming signal 251 has been cleaned up to remove false peaks and false valleys. The window segments 301-305 are referred to generally as sliding windows 300 and are referred to specifically as first sliding window 301, second sliding window 302, third sliding window 303, fourth sliding window 304, and fifth sliding window 305. Each sliding window 300 includes a first portion and a second portion, which are equal to a portion of the width W of the sliding window 300. In one implementation of this embodiment, the first portion is a first half equal to half of the width W of the sliding window. In another implementation of this embodiment, the second portion is a second half equal to half of the width W of the sliding window. As shown in Figure 3, the first sliding window 301 includes a first half 351 and second half 361; the second sliding window 302 includes a first half 352 and second half 362; the third sliding window 303 includes a first half 353 and second half 363; the fourth sliding window 304 includes a first half 354 and second half 364; and the fifth sliding window 305 includes a first half 355 and second half 365.

As shown in Figure 3, the second half 361 of the first sliding window 301 overlaps with the first half 352 of the second sliding window 302. Likewise, the second half 362 of the second sliding window 302 overlaps with the first half 353 of the third sliding window 303; the second half 363 of the third sliding window 303 overlaps with the first half 354 of the fourth sliding window 304; and the second half 364 of the fourth sliding window 304 overlaps with the first half 355 of the fifth sliding window 305.

The duration of a sliding window 300 is referred to herein as the width W of the sliding window 300 and is less than the period T of the real-time incoming signal 250. The width W of the sliding window 300 is less than the duration of the short-time interval 240. In the exemplary embodiment shown in Figure 3, the duration of the sliding window 300 is about nine/tenths of the period (0.9 T) of the real-time incoming signal 250. Other widths for the sliding windows are possible.

The "inertial motion data received in real-time" is also referred to herein as "real-time incoming signal 250". The processing unit 104 segments one channel 403 of the one or more channels (e.g., three accelerometer channels 401-403) of inertial motion data received in real-time based on an estimated initial frequency fₑₛₜ of the short-time interval 240. The estimated initial frequency fₑₛₜ is the inverse of the period T of the real-time incoming signal 250 (Figure 3).

During the segmentation process, the processing unit 104 identifies the true peaks 381-387 and true valleys 371-377 in the data received in real-time within the plurality of sliding windows 301-305 (Figure 3). The segmenting functionality 123 in the processing unit 104 executes (implements) height logic 121 on the data elements 330 as they are received in real-time within the plurality of sliding windows 301-305 to remove peaks and valleys that lie outside a selected range. Any peaks detected in the exemplary real-time incoming signal 250 that are outside of the selected range 280 are removed as outliers. Likewise, any valleys detected in the exemplary real-time incoming signal 250 that are outside of the selected range 281 are removed as outliers. The selected range 280 extends from V_{max-low} to V_{max-high}. The selected range 281 extends from V_{min-high} to V_{min-low}. V_{min-high} is less than V_{max-low} and data elements 330 having a measured value (voltage) that is between V_{min-high} and V_{max-low} is an outlier.

The segmenting functionality 123 in the processing unit 104 also executes (implements) width logic 120 in memory 114 on the data elements 330 as they are received in real-time within the plurality of sliding windows 301-305 to remove a later-received peak 336 that is offset from an earlier-received peak 382 by less than a pre-selected percentage (e.g., 50%) of a calculated mean difference. Likewise, the segmenting functionality 123 implements the width logic 120 on the data elements 330 as they are received in real-time within the plurality of sliding windows 301-305 to remove a later-received valley 330 that is offset from an earlier-received valley 373 by less than the pre-selected percentage (e.g., 50%) of the calculated mean difference. In this manner, during the segmentation process, the portion of the real time incoming signal 250 shown in Figure 2 is cleaned up to form a portion of the segmented signal 251 shown in Figure 3.

The wavelet motion classification functionality 106 in the processing unit 104 selects one of a plurality of gaits 116 as the user's gait based on the segmentation of the one of the one or more channels and the identification of the true peaks 381-387 and true valleys 371-377 in a short-time interval 240. In the exemplary embodiment shown in Figure 1, the processing unit 104 executes wavelet motion classification instructions 107 stored on memory 114 and Kalman filter instructions 109, also stored on memory 114, in implementing the wavelet motion classification functionality 106 and the Kalman filter functionality 108, respectively.

The wavelet motion classification functionality 106 identifies the gait of the user to which the personal navigation system 100 is strapped. The gait for each short-time interval 240 is identified based on the segmented signal 251 (Figure 3). In particular, the wavelet motion classification functionality 106 compares the segmented signal 251 and the remaining unsegmented channels of the received inertial motion data from the IMU 102 to the set of associated gait templates. After identifying the user's gait mode, the wavelet motion classification functionality 106 calculates a distance-traveled estimate based on the identified type of motion or gait mode. The distance-traveled estimate is output to the Kalman filter functionality 108.

Similarly, the processing unit 104 executes inertial navigation instructions 111 stored on a memory 114 in implementing the inertial navigation functionality 110. The processing unit 104 updates the navigation solution based, at least in part, on the distance-traveled estimate.

The Kalman filter functionality 108 outputs Kalman filter corrections to the inertial navigation functionality 110. In one implementation, the Kalman filter functionality 108 also pre-processes and/or pre-filters the input to the Kalman filter prior to calculating the corrections. In addition, in some embodiments, corrections to the distance-traveled estimate are provided from the Kalman filter functionality 108 to the wavelet motion classification functionality 106.

In some embodiments, the system 100 also includes one or more aiding sensors 112 which provide additional motion data to the Kalman filter functionality 108. In this embodiment, the Kalman filter functionality 108 calculates corrections to the navigation solution based on motion data received from the aiding sensors 112. In the exemplary embodiment shown in Figure 1, the optional aiding sensors 112 include one or more magnetic sensors 34, one or more pressure sensors or altimeters 36, and one or more global positioning satellite (GPS) receivers 38.

The processing unit 104 generates the user gait templates 116 in the motion dictionary 116 during a training process. For an indicated user gait mode, the processing unit 104 overlays and time averages the segmented data 251 to create a selected channel gait template for each of the short-time intervals 240, divides the data into two phases correlated with the pose (e.g., right foot down) of the user, and performs a waveform transformation to create the gait template. The processing unit 104 associates the channels for a given gait mode with each other to form the set of associated gait templates.

The processing unit 104 includes or functions with software programs, firmware or other computer readable instructions in a storage medium for carrying out various methods, process tasks, calculations, and control functions, used in the implementing the functionality described above.

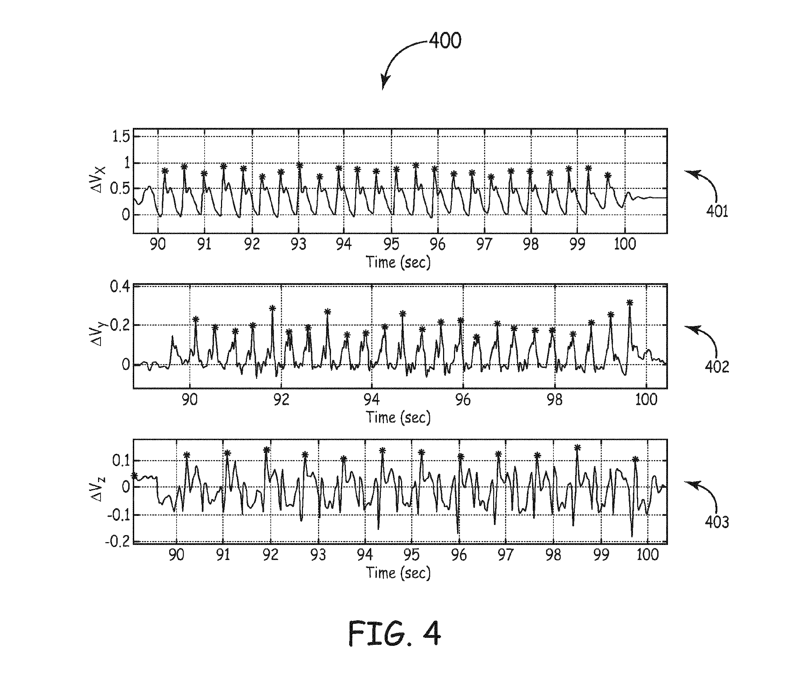

Figure 4 is an exemplary representation of data from the three accelerometers 46 in three accelerometer channels 401-403 after the data has been segmented in accordance with methods and apparatus described herein. Thus, the accelerometer channels 401-403 segmented in accordance with methods and apparatus described herein are a set of associated gait templates 400 or a portion 400 of a set of associated gait templates. The segmentation process has been used in data analysis of the data in the accelerometer channels 401-403 to identify the true peak for each phase, which is indicated by an asterisk (*) in these segmented accelerometer channels 401-403.

It is to be understood that data from the three gyroscopes 48 in three gyroscope channels is similarly analyzed by the segmentation process to identify the true peak for each phase. It is also to be understood that the data from the IMU channels is similarly analyzed by the segmentation process to identify the true valley for each phase. The segmented gyroscope data is part of the set of associated gait templates. The gait templates in the motion dictionary 117 include data channels that are analyzed by the segmentation process during a training process to identify the true peaks and true valley for one of: four phases (two 180° phases and two 0 ° phases); two 180° phases; or two 0 ° phases.

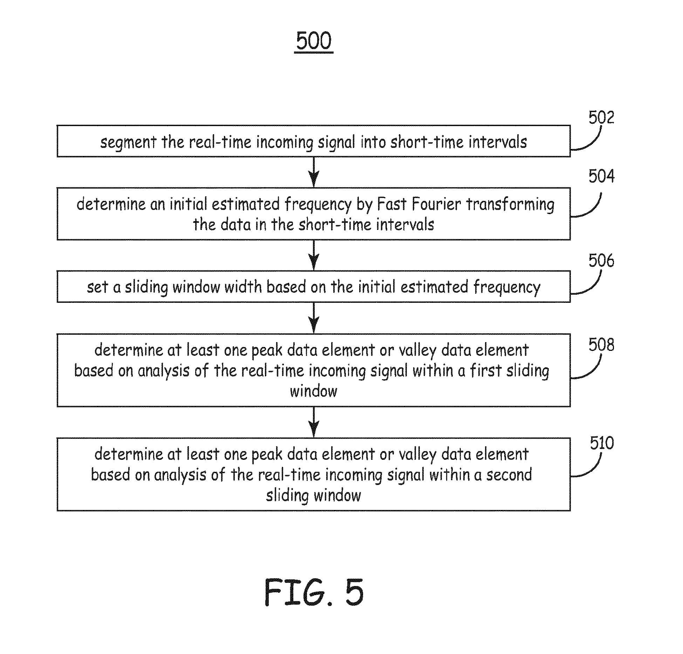

The structure and function of the personal navigation system 100 is described with reference to Figures 1-4. Figure 5 is flow chart depicting one embodiment of a method 500 for accurately detecting true peaks and true valleys in a real-time incoming signal 250. The method 500 described with reference to Figure 5 is implemented by the personal navigation system 100 on real-time incoming signal 250 and is described with reference to Figures 1-4.

At block 502, the processing unit 104 segments the real-time incoming signal 250 into short-time intervals 240. In one implementation of this embodiment, the short-time interval 240 is a 3 second interval.

At block 504, the processing unit 104 determines an initial estimated frequency fₑₛₜ by fast Fourier transforming the data (e.g., data elements 330) in the short-time intervals 240. Each short-time interval 240 is sequentially processed as it is received at the processing unit 104. In another implementation of this embodiment, the processing unit 104 determines the estimated frequency fₑₛₜ by fast Fourier transforming the data 330 in the short-time interval 240 with a weighted fast Fourier transform (FFT). The FFT is weighted using a weighting function since the signal may contain multiple frequency components. The lower frequency components correspond to the major peaks and valleys of the real-time incoming signal 250, so the lower frequencies are weighted more than the higher frequencies.

At block 506, the processing unit 104 sets a sliding window width W based on the estimated frequency fₑₛₜ. In the exemplary real-time incoming signal 250 shown in Figure 2, the sliding window width is equal to 0.9 T, where the period T is the inverse of the initial estimated frequency fₑₛₜ obtained in block 504 (e.g., T = 1/ fₑₛₜ).

At block 508, the processing unit 104 determines at least one peak data element 382 or valley data element 373 based on analysis of the real-time incoming signal 250 within a first sliding window 301. The processing unit 104 determines if a selected-data element 330 within the sliding window 301 is a maximum data element, such as maximum or peak data elements 382, 383, 335, and 336 shown in Figure 2. If the selected-data element 330 is not a peak data element 382, 383, 335, and 336, the processing unit 104 determines if a next-data element is the peak data element.

If the selected-data element 330 is a peak data element (e.g., data element 382 as shown in Figure 2), the processing unit 104 sets the selected-data element 382 as a peak data element and shifts to evaluate a new-selected-data element 330 in the real-time incoming signal 250. The new-selected-data element 330 in the real-time incoming signal 250 was received at the processing unit 104 after the peak data element 382 by a time equal to half the duration (e.g., 0.45 T) of the sliding window 301. As shown in Figure 2, after the data element 382 is determined to be a peak data element, the processing unit 104 next evaluates the data element 339, which is the first data element that was received at the time exceeding 0.45 T after the data element 382 was received. In this manner, the data element 339 is a new-selected-data element 330 after the data element 382 is determined to be a peak data element.

In the exemplary real-time incoming signal 250 shown in Figure 2, when data element 382 is the current data element 330, the processing unit 104 calculates the measured value (voltage) for data element 382 and then calculates measured value (voltage) for the next data element 332. As shown in Figure 3, the processing unit 104 determines that the measured voltage for data element 382 is greater than the measured voltage for data element 332 and then sets the data element 382 as a peak data element.

The processing unit 104 operates is a similar manner to determine the valleys in a first sliding window 301. The processing unit 104 determines if a selected-data element 330 within the sliding window 301 is a minimum data element, such as minimum or valley data elements 372, 333, 373, 334, and 374 shown in Figure 2. If the selected-data element is not a valley data element 372, 333, 373, 334, and 374, the processing unit 104 determines if a new-selected-data element 330 is a valley data element 372, 333, 373, 334, and 374. If the selected-data element is a valley data element, the processing unit 104 sets the selected-data element 330 as a valley data element 373 and shifts to evaluate a data element 330 in the real-time incoming signal 250 received after the current data element 373 by a time equal to half the duration W of the sliding window 301. The data element 330 received after the current data element 373 by a time equal to half the duration of the sliding window is the new-selected-data element.

Each short-time interval 240 extends long enough in time for a plurality of sliding windows 301-305 to be processed sequentially. At block 510, the processing unit 104 determines at least one peak data element 382 or valley data element 373 based on analysis of the real-time incoming signal 250 within a second sliding window 302 (Figure 3). A first half 352 of the second sliding window 302 overlaps a second half 361 of the first sliding window 301. Upon detecting a peak data element 381 or valley data element 372 in the second half 361 of the first sliding window 301, the processing unit 104 shifts to evaluate a data element 330 that is in the first half of the second sliding window 302 (e.g., next sequential sliding window).

The processing unit 104 continues to process for peaks and valleys within the plurality of sliding windows 301-305 in the short-time interval 240. Once the data in the short-time interval 240 has been analyzed in this manner, the processing unit 104 does post processing to remove outliers from the detected peak data elements and the detected valley data elements in the short-time interval 240. For example, as shown in Figure 2, once the data elements 330 in the short-time interval 240 have been analyzed, the processing unit 104 does post processing to remove the peak data elements 335 and 336 and to only keep the global maximum data elements 382 and 383 as described below.

To summarize, there are three phases to identifying the phase of the incoming wave. First, the incoming real-time incoming signal 250 is broken up into short-time intervals 340 (e.g., three second intervals). A weighted fast Fourier transform (FFT) is performed to find the initial frequency fₑₛₜ of the real-time incoming signal 250. Second, the initial estimated frequency fₑₛₜ is used to calculate a sliding window width W. Once the sliding window width W is set, the peak and valley detection is actually performed on 2 cycles. The sliding window is defined as less than 1/2 of the complete phase (0° or 180 ° phase) of the complete first step (e.g., right-foot-down to right-foot-down) and is only 'forward looking' in time.

Third, a heuristic step for post processing is used to remove any false alarms of peak or valley. The processing unit 104 removes the first peak 381 or the first valley 370 in each short-time interval 240 in order to eliminate peaks lying on the short-time-interval boundaries. The processing unit 104 also implements (executes) the height logic 121 and the width logic 120 to remove outliers.

The processing unit 104 implements height logic on the segmented channel of inertial motion data received in real-time within the short-time interval 240 to remove peaks and valleys (peak data elements and valley data elements) that lie outside a selected range. Specifically, the height logic 121 is executed by the processing unit 104 to calculate a mean deviation and a standard deviation of height for the plurality of peak data elements 335, 382, 336, and 383 and the plurality of valley data elements 372, 333, 373, and 334 detected in the short-time interval 240. Then, the height logic 121 is executed by the processing unit 104 to remove peak data elements 335-336 that have respective height values outside a pre-selected-maximum range 280 and to remove valley data elements 333-334 that have respective height values outside that lie outside a pre-selected-minimum range 281(Figure 2). Thus, when the processing unit 104 removes peak data elements 335 and 336 that have respective height values outside a pre-selected-maximum range 280, the remaining peak data elements 382 and 383 are true peaks 382 and 383 in the short-time interval 240. Likewise, when the processing unit 104 removes valley data elements 333 and 334 that have respective height values outside a pre-selected-minimum range 281, the remaining valley data elements 372, 373, and 374 are true valleys 372, 373, and 374 in the short-time interval 240.

The processing unit 104 implements width logic 120 on the segmented channel of inertial motion data received in real-time within the short-time interval 240 to remove a later-received peak (e.g., data element 336 shown in Figure 2) that is offset from an earlier-received peak (e.g., data element 382 shown in Figure 2) by less than the pre-selected percentage (e.g., 50%) of a calculated mean difference. The processing unit 104 implements the width logic 120 on the segmented channel of inertial motion data received in real-time within the short-time interval 240 to remove a later-received valley (e.g., data element 334 shown in Figure 2) that is offset from an earlier-received valley (e.g., data element 373 shown in Figure 2) by less than the pre-selected percentage (e.g., 50%) of the calculated mean difference.

After the height logic 121 and the width logic 120 are executed by the processing unit 104, the remaining plurality of peak data elements 381-387 are true peaks 381-387 and remaining plurality of valley data elements 371-377 are true valleys 371-377.

In one implementation of this embodiment, the short-time interval is 3 seconds. In another implementation of this embodiment, the short-time interval is 3 seconds and the method is performed every 1.5 seconds, to produce 1.5 second overlaps between successive data sets. In yet another implementation of this embodiment, the short-time interval is about 10 seconds. This longer short-time interval is useful when the user of the personal navigation system 100 is an elderly person, who moves slowly.

The personal navigation system 100 shown in Figure 1, implements a training phase, during which the gait templates 116 with only two or four phases are generated, and an operational phase, during which a motion of a user of the person navigation system 100 is classified.

The training phase to generate the gait templates for a user requires the user to strap on the person navigation system 100 and to move in accordance with the various gait modes to be stored in the motion dictionary 117. During the training phase, the inertial measurement unit 102 is configured to output a plurality of channels 400 of inertial motion data while a user moves in a particular gait mode, with the gait having a gait frequency. The user (or other technician) sends an input to the person navigation system 100 to indicate which gait mode is being generated. For example, the user indicates the gait template for a fast run is being prepared and then the user runs fast while the processing unit 104 collects and analyzes the data from the IMU 102.

Specifically, the training phase to generate the gait templates for the user wearing the person navigation system 100 is as follows: receive a user input indicating a user gait at the processing unit 104; receive a plurality of channels of real-time signals from an inertial measurement unit (IMU) 102 for the indicated user gait at the processing unit 104 while the user is moving according to the user gait (gait mode); segment the plurality of channels of the real-time signals into short-time intervals 240; identify true peaks and true valleys in the segmented plurality of channels of the real-time signals for the short-time intervals 240; overlay and time average the signals for the indicated user gait for a plurality of short-time intervals 240; divide the data (e.g., the overlayed and time averaged signals) into a 0 degree phase and a 180 degree phase at the processing unit 104; and transform the data to create a 0-degree-phase-gait template for the indicated user gait for the plurality of channels and to create a 180-degree-phase-gait template for the indicated user gait for the plurality of channels; associate the transformed data for the 0-degree-phase-gait template for the plurality of channels to each other to form a 0-degree-phase set of associated gait templates correlated with the indicated user gait; and associate the transformed data for the 180-degree-phase-gait template for the plurality of channels to each other in order to form a 180-degree-phase set of associated gait templates correlated with the indicated user gait. In one implementation of this embodiment, the processing unit that generates the gait templates 116 is not the processing unit 104 in the person navigation system 100. In that case, the processing unit that generated the gait templates 116 downloads the gait templates into the motion dictionary 117 prior to use of the person navigation system 100.

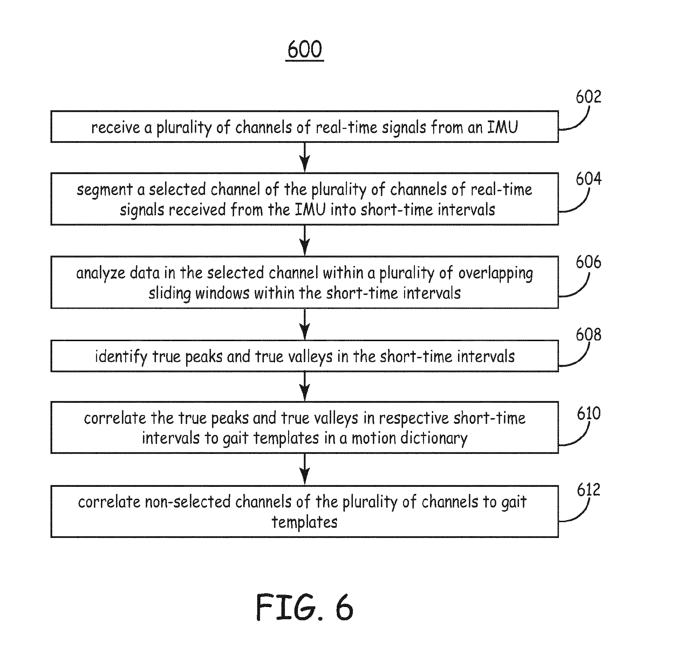

Figure 6 is a flow chart of one embodiment of a method 600 for segmenting real-time incoming signals 250 for motion classification in a personal navigation system 100. The method 600 described with reference to Figure 6 is implemented during an operational phase of the personal navigation system 100 and is described with reference to Figures 1-4.

At block 602, the processing unit 104 receives a plurality of channels of real-time signals from an inertial measurement unit (IMU) 102 and implements segmentation functionality 123. During the operational phase, one channel (a selected channel) of the plurality of channels from the IMU 102 is fed into the segmentation functionality 123. In one implementation of this embodiment, the processing unit 104 receives six channels of the real-time signals from the inertial measurement unit 102.

At block 604, the selected channel of the plurality of channels of real-time signals received from the inertial measurement unit is segmented into short-time intervals 240. As defined herein, the selected channel is that channel receiving data from the accelerometer and gyroscope that is sensing in the direction approximately parallel to the gravitation force of the earth. For example, if the user is walking (standing vertically), the vertical channel selected for segmentation is provided by an exemplary Z-axis sensor. Later, if the user has gone from walking gait mode to a crawling gait mode, the Z-axis sensor is approximately parallel to the earth's surface. In that case, the selected channel that is selected for segmentation is the channel that receives data from the accelerometer and/or gyroscope that is sensing in the direction most parallel to the gravitation force of the earth, e.g., an X-axis sensor or a Y-axis sensor. Technology to determine which of the accelerometers and gyroscopes are sensitive to the direction approximately parallel to the gravitation force of the earth is known to one skilled in the art.

The selected channel (e.g., channel 403 shown in Figure 4) of the plurality of channels 401-403 of real-time signals 250 received from the inertial measurement unit 102 is segmented into short-time intervals 240, a weighted fast Fourier transform is performed on the data within the short-time interval 240 to determining an initial estimated frequency fₑₛₜ. The sliding window width W is set based on the initial estimated frequency fₑₛₜ. Each of the plurality of sliding windows overlap at least one other sliding window by at least a portion of a width of the sliding window. In one implementation of this embodiment, each of the plurality of sliding windows 300 overlap at least one other sliding window by at least half of a width W of the sliding window 300.

At block 606, the processing unit 104 analyzes data in the selected channel within a plurality of overlapping sliding windows 300 within the short-time intervals 240 as described above. During this analysis, the processing unit 104 determines peaks and valleys within each of a plurality of sliding windows as described above with reference to Figures 1-5.

At block 608, the processing unit 104 identifies true peaks (global peaks) and true valleys (global valleys) in the short-time intervals 240 using the sliding windows 300 of the respective short-time intervals 240 as described above. The processing unit 104 implements post-processing on the determined peaks and the determined valleys within the short-time intervals to eliminate false peaks and false valleys in the respective short-time interval.

At block 610, the processing unit 104 correlates the true peaks and true valleys in respective short-time intervals 240 to gait templates 116 in a motion dictionary 117 for the selected channel that was created during a training process. The gait templates comprising the motion dictionary include four phases or two phases

At block 612, the processing unit 104 correlates non-selected channels of the plurality of channels to the gait templates 116 in the motion dictionary 117. For example, if there are six channels of data from the IMU, the five non-selected channels of the six channels are correlated to gait templates. The processing unit 104 generates a composite score for the six channels based on: 1) correlating the true peaks and true valleys in the selected channel to a gait template in the motion dictionary; and 2) correlating the five non-selected channels to gait templates in the motion dictionary. Typically, the gait templates for six channels are associated with each other in the set of associated gait templates. Thus, when the true peaks and true valleys in the selected channel are matched to a gait template for the selected channel in the dictionary, the five non-selected channels are then compared to the five channels in the set of associated gait templates with the gait template matched for the selected channel. A single selected channel is used to segment the data, but all six IMU channels are compared to the dictionary that was created during a training process. In one implementation of this embodiment, the processing unit 104 periodically implements a nearest-neighbor algorithm to choose a motion type for each short-time interval 240 in the received real-time signals.

In this manner, the phase of the real-time incoming signal 250 is identified and the gait and the gait frequency of the user are identified and a motion classification is quantified by the person navigation system 100 for each of the plurality of short-time intervals 240. In one implementation of this embodiment, the quantifying occurs every half of the period T of the short-time interval.

These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

Moreover, although the processing unit 104 and memory 114 are shown as separate elements in Figure 1, in one implementation, the processing unit 104 and memory 114 are implemented in a single device (for example, a single integrated-circuit device). In one implementation, the processing unit 104 comprises processor support chips and/or system support chips such as application-specific integrated circuits (ASICs).

### EXAMPLE EMBODIMENTS

Example 1 includes a method to accurately detect true peaks and true valleys in a real-time incoming signal, the method comprising: segmenting the real-time incoming signal into short-time intervals; determining an initial estimated frequency by fast Fourier transforming data in the short-time intervals; setting a sliding window width based on the initial estimated frequency; determining at least one peak data element or valley data element based on analysis of the real-time incoming signal within a first sliding window; and determining at least one peak data element or valley data element based on analysis of the real-time incoming signal within a second sliding window, wherein a first portion of the second sliding window overlaps a second portion of the first sliding window.

Example 2 includes the method of Example 1, wherein determining the at least one peak data element based on analysis of the real-time incoming signal within the first sliding window comprises: determining if a selected-data element within the first sliding window is a maximum data element; if the selected-data element is not the maximum data element, determining if a next-data element is the maximum data element; and if the selected-data element is the maximum data element, the method further comprises: setting the selected-data element as the peak data element; and shifting to evaluate a new-selected-data element in the real-time incoming signal, wherein the new selected-data element is received after the peak data element by a time equal to half the duration of the sliding window.

Example 3 includes the method of any of Examples 1-2, wherein determining the at least one valley data element based on analysis of the real-time incoming signal within the first sliding window comprises: determine if a selected-data element within the first sliding window is a minimum data element; if the selected-data element is not the minimum data element, determining if next-data element is the minimum data element; and if the selected-data element is the minimum data element, the method further comprises: setting the selected-data element as the valley data element; and shifting to evaluate a new-selected-data element in the real-time incoming signal, wherein the new selected-data element is received after the valley data element by a time equal to half the duration of the sliding window.

Example 4 includes the method of any of Examples 1-3, further comprising: removing a first peak data element or a first valley data element in each short-time interval.

Example 5 includes the method of any of Examples 1-4, further comprising: calculating a mean deviation and a standard deviation of height value for a plurality of peak data elements in the short-time intervals; calculating a mean deviation and a standard deviation of height value for a plurality of valley data elements in the short-time intervals; removing peak data elements that have respective height values outside a pre-selected-maximum range wherein remaining peak data elements are true peaks in the short-time intervals; and removing valley data elements that have respective height values outside a pre-selected-minimum range, wherein remaining valley data elements are true valleys in the short-time intervals.

Example 6 includes the method of any of Examples 1-5, wherein determining the initial estimated frequency by fast Fourier transforming the data comprises determining the initial estimated frequency by fast Fourier transforming the data in the short-time interval with a weighted the fast Fourier transform.

Example 7 includes a method for segmenting real-time incoming signals for motion classification in a personal navigation system, the method comprising: receiving a plurality of channels of real-time signals from an inertial measurement unit; segmenting a selected channel of the plurality of channels of the real-time signals received from the inertial measurement unit into short-time intervals; analyzing data in the selected channel within a plurality of overlapping sliding windows within the short-time intervals, wherein each of the plurality of sliding windows overlap at least one other sliding window by at least a portion of a width of the sliding window; identifying true peaks and true valleys in the selected channel based on the analysis of data in the overlapping sliding windows of the respective short-time intervals; and correlating the true peaks and the true valleys in respective short-time intervals for the selected channel to gait templates in a motion dictionary, wherein the gait templates comprising the motion dictionary include four phases or two phases.

Example 8 includes the method of Example 7, wherein segmenting the selected channel of the plurality of channels of the real-time signals received from the inertial measurement unit into short-time intervals comprises; determining an initial estimated frequency by performing a weighted fast Fourier transform on the data within at least one short-time interval; and setting a sliding window width based on the initial estimated frequency.

Example 9 includes the method of any of Examples 7-8, wherein identifying the true peaks and the true valleys in the selected channel comprises: post-processing the determined peaks and the determined valleys within the short-time intervals to eliminate false peaks and false valleys.

Example 10 includes the method of any of Examples 7-9, wherein receiving the plurality of channels of the real-time signals from the inertial measurement unit comprises receiving six channels of the real-time signals from the inertial measurement unit, the method further comprising: correlating five non-selected channels of the six channels to the gait templates in the motion dictionary.

Example 11 includes the method of Example 10, further comprising: generating a composite score for the six channels based on correlating the five non-selected channels to the gait templates in the motion dictionary and correlating the true peaks and true valleys in the selected channel to the gait templates in the motion dictionary.

Example 12 includes the method of any of Examples 7-11, further comprising: periodically implementing a nearest-neighbor algorithm to choose a motion type for each short-time interval in the received real-time signals.

Example 13 includes the method of any of Examples 7-12, further comprising: generating the motion dictionary by: receiving a user input indicating a user gait; receiving a plurality of channels of real-time signals from an inertial measurement unit (IMU) for the indicated user gait; segmenting the plurality of channels of the real-time signals into short-time intervals; identifying true peaks and true valleys in the segmented plurality of channels of the real-time signals for the short-time intervals; overlaying and time averaging the signals for the indicated user gait; dividing the data into a 0 degree phase and a 180 degree phase; and transforming the data to create a 0-degree-phase-gait template for the indicated user gait for the plurality of channels and to create a 180-degree-phase-gait template for the indicated user gait for the plurality of channels.

Example 14 includes the method of any of Examples 7-13, further comprising: selecting the channel receiving data from a sensor sensing in a direction approximately parallel to the gravitation force of earth to be the selected channel.

Example 15 includes a personal navigation system comprising: an inertial measurement unit configured to sense motion of a user and to output one or more channels of inertial motion data corresponding to the sensed motion; and a processing unit configured to: segment one of the one or more channels of inertial motion data received in real-time into short-time intervals; identify true peaks and true valleys in the segmented channel of inertial motion data within respective short-time intervals, using sliding windows in the short-time intervals, wherein the sliding windows overlap adjacent sliding windows by a portion of a width of the sliding windows; and select one of a plurality of gaits from a motion dictionary as the user's gait for the respective short-time intervals based on the identification of the true peaks and the true valleys within the respective short-time intervals.

Example 16 includes the personal navigation system of Example 15, wherein the processing unit is further configured to: implement height logic on the segmented channel of inertial motion data received in real-time within the short-time interval to remove peaks that lie outside a pre-selected-maximum range and to remove valleys that lie outside a pre-selected-minimum range; implement width logic on the segmented channel of inertial motion data received in real-time within the short-time interval to remove later-received peaks that are offset from respective earlier-received peaks by less than a pre-selected percentage of a calculated mean difference; and implement the width logic on the segmented channel of inertial motion data received in real-time within the short-time interval to remove later-received valleys that are offset from respective earlier-received valleys by less than the pre-selected percentage of the calculated mean difference.

Example 17 includes the personal navigation system of any of Examples 15-16, wherein the processing unit is further configured to calculate a distance-traveled estimate based, in part, on the selected user's gait, wherein the processing unit is configured to update a navigation solution based on the distance-traveled estimate.

Example 18 includes the personal navigation system of any of Examples 15-17, wherein the personal navigation system further comprises: one or more aiding sensors each configured to sense motion of the user and output signals corresponding to the user's motion, wherein the processing unit is further configured to update the navigation solution based on the signals from the one or more aiding sensors.

Example 19 includes the personal navigation system of any of Examples 15-18, wherein, during a training phase, the inertial measurement unit is configured to output a plurality of channels of inertial motion data.

Example 20 includes the personal navigation system of any of Examples 15-19, wherein, during the training phase, the processing unit is configured to receive user input indicating a user gait corresponding to the inertial motion data from the plurality of channels

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for segmenting real-time incoming signals (250) for motion classification in a personal navigation system (100), the method comprising:
receiving a plurality of channels (401-403) of real-time signals (250) from an inertial measurement unit (102);
segmenting a selected channel (403) of the plurality of channels of the real-time signals received from the inertial measurement unit into short-time intervals (240);
analyzing data in the selected channel within a plurality of overlapping sliding windows (301-305) within the short-time intervals, wherein each of the plurality of sliding windows overlap at least one other sliding window by at least a portion of a width (W) of the sliding window;
identifying true peaks (382) and true valleys (373) in the selected channel based on the analysis of data in the overlapping sliding windows of the respective short-time intervals; and
correlating the true peaks and the true valleys in respective short-time intervals for the selected channel to gait templates (116) in a motion dictionary (117), wherein the gait templates comprising the motion dictionary include four phases or two phases.

2. The method of claim 1, wherein segmenting the selected channel (403) of the plurality of channels of the real-time signals (250) received from the inertial measurement unit (102) into short-time intervals (240) comprises;
determining an initial estimated frequency (fₑₛₜ) by performing a weighted fast Fourier transform on the data within at least one short-time interval; and
setting a sliding window width (W) based on the initial estimated frequency.

3. The method of claim 1, wherein identifying the true peaks (382) and the true valleys (373) in the in the selected channel (403) comprises:
post-processing the determined peaks and the determined valleys within the short-time intervals to eliminate false peaks (336) and false valleys (333).

4. The method of claim 1, wherein receiving the plurality of channels (401-403) of the real-time signals (250) from the inertial measurement unit (102) comprises receiving six channels of the real-time signals from the inertial measurement unit, the method further comprising:
correlating five non-selected channels of the six channels to the gait templates (116) in the motion dictionary (117).

5. The method of claim 4, further comprising:
generating a composite score for the six channels based on correlating the five non-selected channels to the gait templates (116) in the motion dictionary (117) and correlating the true peaks (382) and true valleys (373) in the selected channel to the gait templates in the motion dictionary.

6. The method of claim 1, further comprising:
periodically implementing a nearest-neighbor algorithm to choose a motion type for each short-time interval in the received real-time signals.

7. The method of claim 1, further comprising:
generating the motion dictionary (117) by:
receiving a user input indicating a user gait;
receiving a plurality of channels of real-time signals (250) from an inertial measurement unit (IMU) (102) for the indicated user gait;
segmenting the plurality of channels of the real-time signals into short-time intervals (240);
identifying true peaks (382) and true valleys (373) in the segmented plurality of channels of the real-time signals for the short-time intervals;
overlaying and time averaging the signals for the indicated user gait;
dividing the data into a 0 degree phase and a 180 degree phase; and
transforming the data to create a 0-degree-phase-gait template for the indicated user gait for the plurality of channels and to create a 180-degree-phase-gait template for the indicated user gait for the plurality of channels.

8. The method of claim 1, further comprising:
selecting the channel receiving data from a sensor (46) sensing in a direction approximately parallel to the gravitation force of earth to be the selected channel.

9. A personal navigation system (100) comprising:
an inertial measurement unit (102) configured to sense motion of a user and to output one or more channels (400-403) of inertial motion data corresponding to the sensed motion; and
a processing unit (104) configured to:
segment one of the one or more channels (403) of inertial motion data received in real-time into short-time intervals (240);
identify true peaks (382) and true valleys (373) in the segmented channel of inertial motion data within respective short-time intervals, using sliding windows (300) in the short-time intervals, wherein the sliding windows overlap adjacent sliding windows by a portion of a width (W) of the sliding windows; and
select one of a plurality of gaits (116) from a motion dictionary (117) as the user's gait for the respective short-time intervals based on the identification of the true peaks and the true valleys within the respective short-time intervals.

10. The personal navigation system of claim 9, wherein the processing unit is further configured to:
implement height logic (121) on the segmented channel (403) of inertial motion data received in real-time within the short-time interval (240) to remove peaks (336) that lie outside a pre-selected-maximum range (280) and to remove valleys (334) that lie outside a pre-selected-minimum range (281);
implement width logic (120) on the segmented channel (403) of inertial motion data received in real-time within the short-time interval to remove later-received peaks (336) that are offset from respective earlier-received peaks (382) by less than a pre-selected percentage of a calculated mean difference; and
implement the width logic (120) on the segmented channel of inertial motion data received in real-time within the short-time interval to remove later-received valleys (330) that are offset from respective earlier-received valleys (373) by less than the pre-selected percentage of the calculated mean difference.
